# EUROPEAN PATENT APPLICATION

(11) **EP 4 715 615 A1**
(43) Date of publication of application: **25.03.2026**
(21) Application number: 25199893.6
(22) Date of filing: 03.09.2025
(51) Int. Cl.: G06F 13/42

(54) **METHOD AND DEVICE FOR ADVANCED FLEXIBLE CONTROL MANAGEMENT OF UALINK AND DIE-TO-DIE INTERFACES**

(30) Priority: 20.09.2024 US 202463697042 P; 10.03.2025 US 202519075093
(71) Applicant: Samsung Electronics Co., Ltd., Suwon-si, Gyeonggi-do 16677 (KR)
(72) Inventor: KIM, Soon Ju, San Jose, CA 95134 (US)
(74) Representative: Kuhnen & Wacker Patent- und Rechtsanwaltsbüro PartG mbB

(57) **Abstract**

Methods and devices are provided in which a hardware control manager of an electronic device configures a die-to-die, D2D, constraint for a topology. The hardware control manager (184) manages a D2D interface. The hardware control manager performs D2D synchronization based on the D2D constraint. The hardware control manager configures an inter-accelerator link constraint for the topology. The hardware control manager (184) manages a high-speed inter-accelerator link. The hardware control manager (184) performs high-speed inter-accelerator link synchronization based on the inter-accelerator link constraint. The hardware control manager (184) monitors the D2D interface and the high-speed inter-accelerator link based on the topology.

## Description

### TECHNICAL AREA

The present disclosure relates generally to high performance computing (HPC) systems, and more particularly, to a method and device for control management of high-speed communication between dies and accelerators.

### BACKGROUND

The present background section is intended to provide context only, and the disclosure of any concept in this section does not constitute an admission that said concept is prior art.

In the evolving landscape of HPC and artificial intelligence (AI), the demand for efficient, high-bandwidth, and low-latency interconnects has increased. Technologies such as ultra accelerator link (UALink) and die-to-die interface have emerged as solutions to meet these requirements.

UALink is an open industry standard developed to facilitate high-speed communication between AI accelerators. UALink offers a maximum throughput of 200 Gigabytes/second (Gbps) per lane, enabling scalability to support large AI accelerator clusters. The UALink Internet protocol (IP) solution includes a controller, a physical layer (PHY), and verification IP, which are each configured to handle data-intensive AI workloads with low latency and advanced memory-sharing capabilities. This integrated approach reduces integration risks and accelerates time-to-market for AI and HPC chip designers.

Die-to-die interfaces are functional blocks that provide data connectivity between two silicon dies within the same package. They leverage short communication channels to achieve superior power efficiency and high bandwidth, surpassing traditional chip-to-chip interfaces. Typically, a die-to-die interface includes a PHY and a controller block, facilitating seamless connections between the internal interconnect fabrics of two dies. This architecture supports various advanced packing technologies.

Despite their advantages, managing UALink and die-to-die interfaces presents significant challenges. The complexity of these high-speed interconnects can lead to configuration mismatches, resulting in inefficient data flow and increased error rates. Debugging such errors may be challenging due to the intricate nature of the interfaces and the lack of efficient management tools. Moreover, existing solutions may not provide adequate flow control mechanisms, leading to congestion and suboptimal performance.

### SUMMARY

According to an embodiment, a method is provided in which a hardware control manager of an electronic device configures a D2D constraint for a topology. The hardware control manager manages a D2D interface. The hardware control manager performs D2D synchronization based on the D2D constraint. The hardware control manager configures an inter-accelerator link constraint for the topology. The hardware control manager manages a high-speed inter-accelerator link. The hardware control manager performs high-speed inter-accelerator link synchronization based on the inter-accelerator link constraint. The hardware control manager monitors the D2D interface and the high-speed inter-accelerator link based on the topology.

According to this embodiment, the D2D constraint may include at least one of a physical transport layer (PTL) constraint, an application data link (ADL) constraint, or a PHY constraint. The inter-accelerator link constraint may include at least one of a PTL constraint, a timing layer constraint, a data link layer constraint, and a PHY constraint. The D2D synchronization may be performed within a maximum number of synchronization attempts, and the high-speed inter-accelerator link synchronization may be performed within the maximum number of synchronization attempts.

According to this embodiment, the topology may be valid with respect to a bandwidth, and a current setting may be unacceptable with respect to a parameter of the topology. The hardware control manager may set a constraint with respect to at least one of a number of replies, enablement of replies, credit information, or bandwidth allocation.

According to this embodiment, an inter-accelerator link parameter and a D2D parameter may be valid for the constraint.

According to this embodiment, an inter-accelerator link parameter or a D2D parameter may not be valid for the constraint, and the hardware control manager may reset the constraint.

According to an embodiment, an electronic device is provided that includes dies joined by a D2D interface, accelerators joined by a high-speed inter-accelerator link, and a hardware control manager configured to manage the D2D interface and the high-speed inter-accelerator link. The hardware control manager is further configured to configure a D2D constraint for a topology, and perform D2D synchronization based on the D2D constraint. The hardware control manager is also configured to configure an inter-accelerator link constraint for the topology, and perform high-speed inter-accelerator link synchronization based on the inter-accelerator link constraint. The hardware control manager is also configured to monitor the D2D interface and the high-speed inter-accelerator link based on the topology.

According to this embodiment, the D2D constraint may include at least one of a PTL constraint, an ADL constraint, or a PHY constraint. The inter-accelerator link constraint may include at least one of a PTL constraint, a timing layer constraint, a data link layer constraint, and a PHY constraint. The D2D synchronization may be performed within a maximum number of synchronization attempts, and the high-speed inter-accelerator link synchronization may be performed within the maximum number of synchronization attempts.

According to this embodiment, the topology may be valid with respect to a bandwidth, and a current setting may be unacceptable with respect to a parameter of the topology. The hardware control manager may set a constraint with respect to at least one of a number of replies, enablement of replies, credit information, or bandwidth allocation.

According to this embodiment, an inter-accelerator link parameter and a D2D parameter may be valid for the constraint.

According to this embodiment, an inter-accelerator link parameter or a D2D parameter may not be valid for the constraint, and the hardware control manager may reset the constraint.

According to an embodiment, an electronic device is provided that includes a controller and a non-transitory computer readable storage medium storing instructions. When executed, the instructions cause the controller to configure, by a hardware control manager of the electronic device, a D2D constraint for a topology, manage a D2D interface by the hardware control manager, perform, by the hardware control manager, D2D synchronization based on the D2D constraint, configure, by the hardware control manager, an inter-accelerator link constraint for the topology, manage a high-speed inter-accelerator link by the hardware control manager, perform, by the hardware control manager, high-speed inter-accelerator link synchronization based on the inter-accelerator link constraint, and monitor, by the hardware control manager, the D2D interface and the high-speed inter-accelerator link based on the topology.

### BRIEF DESCRIPTION OF THE DRAWINGS

The drawings described below are examples of how embodiments of the disclosure may be implemented, and are not intended to limit embodiments of the disclosure. Individual embodiments of the disclosure may include elements not shown in particular figures and/or may omit elements shown in particular figures. The drawings are intended to provide illustration and may not be to scale. The above and other aspects, features, and advantages of certain embodiments of the present disclosure will be more apparent from the following detailed description, taken in conjunction with the accompanying drawings, in which:
FIG. 1 is a diagram illustrating a first portion of a system architecture for managing data flow in a high-speed interconnect system, according to an embodiment;
FIG. 2 is a diagram illustrating a second portion of the system architecture for managing data flow in a high-speed interconnect system, according to an embodiment;
FIGS. 3A-3B are diagrams illustrating an advanced flexible control manager (AFCM) topology configuration, according to an embodiment;
FIGS. 4A-4B are diagrams illustrating a method of operating the AFCM, according to an embodiment; and
FIG. 5 is a block diagram of an electronic device in a network environment for processing commands, according to an embodiment.

### DETAILED DESCRIPTION

Hereinafter, embodiments of the present disclosure are described in detail with reference to the accompanying drawings. It should be noted that the same elements will be designated by the same reference numerals although they are shown in different drawings. In the following description, specific details such as detailed configurations and components are merely provided to assist with the overall understanding of the embodiments of the present disclosure. Therefore, it should be apparent to those skilled in the art that various changes and modifications of the embodiments described herein may be made without departing from the scope of the present disclosure. In addition, descriptions of well-known functions and constructions are omitted for clarity and conciseness. The terms described below are terms defined in consideration of the functions in the present disclosure, and may be different according to users, intentions of the users, or customs. Therefore, the definitions of the terms should be determined based on the contents throughout this specification.

The present disclosure may have various modifications and various embodiments, among which embodiments are described below in detail with reference to the accompanying drawings. However, it should be understood that the present disclosure is not limited to the embodiments, but includes all modifications, equivalents, and alternatives within the scope of the present disclosure.

Although the terms including an ordinal number such as first, second, etc. may be used for describing various elements, the structural elements are not restricted by the terms. The terms are only used to distinguish one element from another element. For example, without departing from the scope of the present disclosure, a first structural element may be referred to as a second structural element. Similarly, the second structural element may also be referred to as the first structural element. As used herein, the term "and/or" includes any and all combinations of one or more associated items.

The terms used herein are merely used to describe various embodiments of the present disclosure but are not intended to limit the present disclosure. Singular forms are intended to include plural forms unless the context clearly indicates otherwise. In the present disclosure, it should be understood that the terms "include" or "have" indicate existence of a feature, a number, a step, an operation, a structural element, parts, or a combination thereof, and do not exclude the existence or probability of the addition of one or more other features, numerals, steps, operations, structural elements, parts, or combinations thereof.

Unless defined differently, all terms used herein have the same meanings as those understood by a person skilled in the art to which the present disclosure belongs. Terms such as those defined in a generally used dictionary are to be interpreted to have the same meanings as the contextual meanings in the relevant field of art, and are not to be interpreted to have ideal or excessively formal meanings unless clearly defined in the present disclosure.

The terms used in the present disclosure are not intended to limit the present disclosure but are intended to include various changes, equivalents, or replacements for a corresponding embodiment. With regard to the descriptions of the accompanying drawings, similar reference numerals may be used to refer to similar or related elements. A singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, terms such as "1^{st}," "2^{nd}," "first," and "second" may be used to distinguish a corresponding component from another component, but are not intended to limit the components in other aspects (*e.g.*, importance or order). It is intended that if an element (*e.g.,* a first element) is referred to, with or without the term "operatively" or "communicatively", as "coupled with," "coupled to," "connected with," or "connected to" another element (*e.g.,* a second element), it indicates that the element may be coupled with the other element directly (*e.g.*, wired), wirelessly, or via a third element.

As used herein, the term "module" may include a unit implemented in hardware, software, firmware, or combination thereof, and may interchangeably be used with other terms, for example, "logic," "logic block," "part," and "circuitry." A module may be a single integral component, or a minimum unit or part thereof, adapted to perform one or more functions. For example, according to one embodiment, a module may be implemented in a form of an application-specific integrated circuit (ASIC), a co-processor, or field programmable gate arrays (FPGAs).

An electronic device, according to one embodiment, may be one of various types of electronic devices utilizing storage devices (e.g., memory devices). The electronic device may use any suitable storage standard, such as, for example, peripheral component interconnect express (PCIe), nonvolatile memory express (NVMe), NVMe-over-fabric (NVMeoF), advanced extensible interface (AXI), ultra path interconnect (UPI), ethernet, transmission control protocol/Internet protocol (TCP/IP), remote direct memory access (RDMA), RDMA over converged ethernet (ROCE), fibre channel (FC), infiniband (IB), serial advanced technology attachment (SATA), small computer systems interface (SCSI), serial attached SCSI (SAS), Internet wide-area RDMA protocol (iWARP), and/or the like, or any combination thereof. In some embodiments, an interconnect interface may be implemented with one or more memory semantic and/or memory coherent interfaces and/or protocols including one or more compute express link (CXL) protocols such as CXL.mem, CXL.io, and/or CXL.cache, Gen-Z, coherent accelerator processor interface (CAPI), cache coherent interconnect for accelerators (CCIX), and/or the like, or any combination thereof. Any of the memory devices may be implemented with one or more of any type of memory device interface including double data rate (DDR), DDR2, DDR3, DDR4, DDR5, DDR6, low-power DDR (LPDDRX), open memory interface (OMI), Nvlink high bandwidth memory (HBM), HBM2, HBM3, and/or the like. The electronic devices may include, for example, a portable communication device (*e.g.*, a smart phone), a computer, a portable multimedia device, a portable medical device, a camera, a wearable device, or a home appliance. However, an electronic device is not limited to those described above.

There is need for an AFCM tailored for input/output (I/O) chipsets, such as UALink and die-to-die interfaces. Such a manager may provide efficient configuration management, real-time monitoring, and robust debugging capabilities. By implementing flow control mechanisms, it may ensure optimal data transfer rates, minimize errors, and enhance overall system performance, which may be instrumental in advancing the efficiency and reliability of high-performance computing systems. The AFCM serves as an example of a hardware control manager.

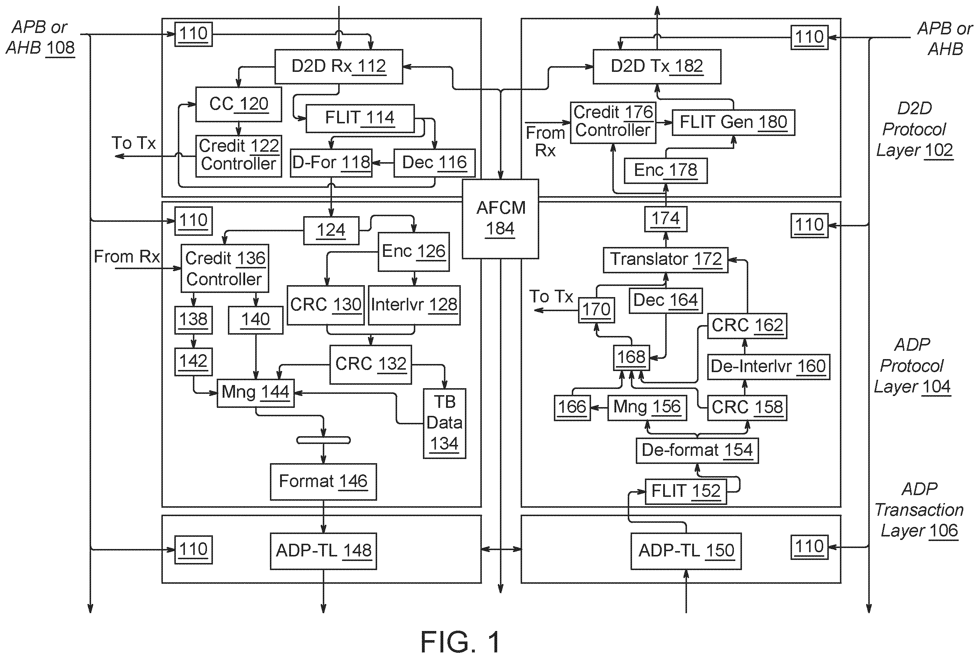

FIG. 1 is a diagram illustrating a first portion of a system architecture for managing data flow in a high-speed interconnect system, according to an embodiment. Specifically, FIG. 1 illustrates a first portion of an architecture 100 organized into three primary layers: a D2D protocol layer 102, a Layer 2 (e.g., ADP) protocol layer 104, and a Layer 2 (e.g., ADP) transaction layer 106, with the left side of the diagram depicting the receive path and the right side depicting the transmit path. Data, control signals and error-handling processes may flow between these layers and their respective components, as indicated by directional arrows.

Advanced peripheral bus (APB) or advanced high-performance bus (AHB) interfaces 108 may serve as entry points to the D2D protocol layer 102, the ADP protocol layer 104, and the ADP transaction layer 106 for external configuration and control of corresponding systems registers 110. Configuration data may be written to the registers 110, and system status may be read back via the APB or AHB interfaces 108. These interfaces 108 ensure external devices or systems can control and monitor the communication process.

The registers 110 may store configuration settings and system status, and may act as control points for all layers and components in the system. The registers 110 may provide configuration data to various blocks in the D2D protocol layer 102, ADP protocol layer 104, and ADP transaction layer 106. The registers 110 may also collect and report status information for debugging and monitoring purposes.

The D2D protocol layer 102 may manage D2D communication protocol operations and ensure reliable data transmission. It may manage physical and link-layer aspects of the communication, ensuring reliable data transfer between chips on the same die. In the receive path, a D2D receiver (Rx) 112 may receive data from a D2D physical interface. Specifically, the D2D Rx 112 may accept an incoming flow control unit (FLIT) 114, a data packet, or a group of signals from the D2D physical interface, and may forward the received FLIT 114 or data to a single error correction and double error detection (SECDED) decoder 116 and a de-format block 118. The SECDED decoder 116 may be an optional feature, and the SECDED decoder 116 may be turned on/off based on whether it is in use. If in use, the SECDED decoder 116 may implement SECDED to ensure data integrity. Specifically, the SECDED decoder 116 may correct single-bit errors, flag double-bit errors, and pass corrected FLIT 114 to the de-format block 118. The de-format block 118 may strip protocol-specific headers from an incoming FLIT to extract raw data. Specifically, the de-format block 118 may accept the FLIT 114 from the SECDED decoder 116 and may extract payload data and forward it to an output queue.

A D2D credit completer (CC) 120 may be in communication with the D2D Rx 112 and the SECDED decoder 116, and may track the state of credits for managing buffer availability at the receiver. Specifically, the D2D credit completer 120 may send updated credit information to a D2D credit controller 122 based on buffer occupancy, and may adjust credit levels dynamically as data is received and processed. The D2D credit controller 122 may ensure flow control by monitoring and managing credit signals for data transfer. Specifically, the D2D credit controller 122 may regulate data flow with a transmitter based on available buffer space in the receiving die.

The ADP protocol layer 104 may manage higher-level communication protocols for receiving data over a UALink. This layer may handle tasks such as flow control, error detection, and data integrity. An elastic buffer 124 of the ADP protocol layer 104 may temporarily store incoming FLITs from the de-format block 118 to accommodate timing mismatches between data reception and processing. Specifically, the elastic buffer 124 may smooth the flow of data into downstream components.

The elastic buffer 124 may be in communication with an encoding block 126 for transmit (Tx) data that may apply encoding to raw transaction data, preparing it for secure and efficient transmission. Encoded data may be sent to an interleaving block 128 and a first cyclic redundancy check (CRC) block 130. The interleaving block 128 may ensure that data streams are interleaved in a way that enhances error resilience during transmission. The first CRC block 130 may generate a checksum for the encoded data to detect errors. Results of the interleaving block 128 and first CRC block 130 are provided to a second CRC block 132, which may generate a checksum for the transaction data to detect errors in the transmission process, and results in TB data 134 which awaits further processing or transmission.

A Tx credit controller 136 may be in communication with the elastic buffer 124 and may manage transmission credits for data streams, preventing buffer overflows. The Tx credit controller 136 may be in communication with a write/read response credit generator 138 and a request channel generator 140. The write/read response credit generator 138 may generate credits for read and write responses, and a credit parity generator 142 may ensure parity checking for the credit signals to detect errors in flow control. The request channel generator 140 may generate and manage request channels for transaction processing.

The credit parity generator 142, the request channel generator 140, the second CRC 132, and the TB data 134 may be in communication with an ADP channel management block 144, which may oversee the allocation and utilization of communication channels within the system, ensuring proper data routing. An ADP FLIT formatting block 146 adds protocol-specific headers in preparing data for the transaction layer, before forwarding the formatted data to an ADP-TL block 148.

The ADP transaction layer 106 may provide buffering, queuing, and data transfer operations between subsystems and the protocol layers. The ADP transaction layer 106 may include a subsystem interface that may act as the entry and exit point for data between the system and external subsystems. Specifically, the subsystem interface may send data from subsystems to the input queue, and may receive data from the output queue and forward it to the appropriate subsystem.

In the transmit path, an ADP-TL block 150 may forward FLIT 152 or data to a de-formatting block 154 of the ADP protocol layer 104. The de-formatting block 154 may remove protocol-specific headers used in the ADP transaction layer 106 from the data. The de-formatting block 154 may be in communication with a control data management block 156 and a TB CRC checker 158. The TB CRC checker 158 may generate a checksum for the de-formatted data to detect errors, which may flow to a deinterleaver 160 that may ensure that data streams are deinterleaved in a way that enhances error resilience, which may flow to an on-the-fly CB CRC checker 162 that may generate a checksum for the deinterleaved data streams. The deinterleaved data streams may be provided to a decoder 164 that applies decoding, preparing it for secure and efficient transmission.

The control data management block 156 may be in communication with a credits parity check block 166 that may ensure parity checking to detect errors in flow control. The credits parity check block 166, the TB CRC checker 158, the on-the-fly CB CRC checker 162, and the decoder 164 may be in communication with an ADP credit completer 168, which may send updated credit information to an ADP credit controller 170 based on buffer occupancy, and may adjust credit levels dynamically as data is received and processed. The ADP credit controller 170 may ensure flow control by monitoring and managing credit signals for data transfer. Specifically, the ADP credit controller 170 may regulate data flow with a transmitter based on available buffer space in the receiving die.

A D2D required protocol translator 172 may be in communication with the ADP credit controller 170 and the decoder 164, and an elastic buffer 174 may temporarily store incoming FLITs from the translator 172 to accommodate timing mismatches between data transmission and processing. Specifically, the elastic buffer 174 may smooth the flow of data into upstream components.

In the D2D protocol layer 102, a D2D credit controller 176 and a SECDED encoder 178 may receive data from the elastic buffer 174. The D2D credit controller 176 may ensure flow control by monitoring and managing credit signals for data transfer. The SECDED encoder 178 may add SECDED error-checking bits to outgoing data for error detection and correction. The D2D credit controller 176 and the SECDED encoder 178 are in communication with a D2D FLIT generator 180 or port mapper, which may provide data to a D2D transmitter (Tx) 182. The D2D Tx 182 may prepare and send data over the D2D physical interface for transmission to the receiving die.

An AFCM 184 may be disposed between the receive side and the transmit side, and may be in communication with side-bands of the D2D Rx 112 and the D2D Tx 182, as well as the ADP transaction layer 106 of both the receive side and the transmit side. The AFCM 184 may dynamically manage data flow across the entire system. The AFCM 184 may monitor and adjust flow control signals ensuring congestion avoidance and error recovery. The AFCM 184 may interface with all layers to maintain system stability and performance.

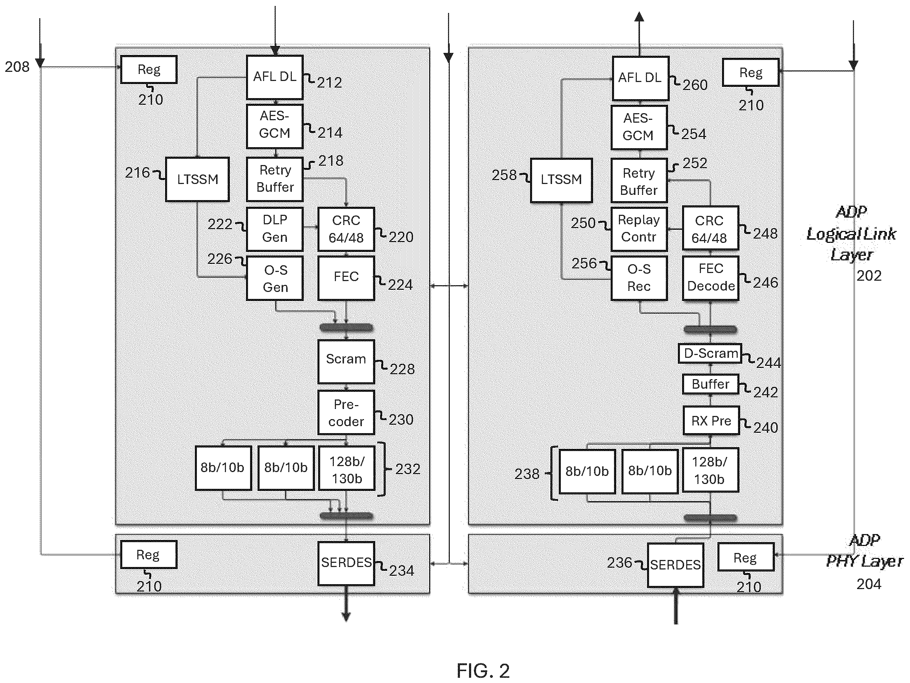

FIG. 2 is a diagram illustrating a second portion of a system architecture for managing data flow in a high-speed interconnect system, according to an embodiment. FIG. 2 illustrates a second portion of the architecture 100 organized into three primary layers: an ADP logical link layer 202, and an ADP PHY layer 204, with the left side of the diagram depicting the receive path and the right side depicting the transmit path. Data, control signals and error-handling processes may flow between these layers and their respective components, as indicated by directional arrows.

APB or AHB interfaces 208 may serve as entry points to the ADP logical link layer 202 and the ADP PHY layer 204 for external configuration and control of corresponding systems registers 210. Configuration data may be written to the registers 210, and system status may be read back via the APB or AHB interfaces 208. These interfaces 208 ensure external devices or systems can control and monitor the communication process.

The registers 210 may store configuration settings and system status, and may act as control points for all layers and components in the system. The registers 210 may provide configuration data to various blocks in the ADP logical link layer 202 and the ADP PHY layer 204. The registers 210 may also collect and report status information for debugging and monitoring purposes.

The ADP logical link layer 202 ensures reliable data transmission by implementing encoding, error correction, flow control, and retry mechanisms. It handles data framing, encryption, scrambling and link training, ensuring data integrity and synchronization. The ADP PHY layer 204 may manage the physical transmission of data via a serializer/deserializer (SERDES), which converts parallel data streams into serial data for high-speed communication.

The receiving path of the ADP logical link layer may include an AFL data link 212 that may receive data from the ADP transaction layer 106 of FIG. 1. The AFL data link 212 may be responsible for managing logical link control and ensuring that incoming data conforms to the expected structure. Incoming FLITs may be forwarded to an advanced encryption standard-Galois/counter mode (AES-GCM) block 214 and a link training and status state machine (LTSSM) 216. The AES-GCM block 214 may be used for data decryption and authentication, ensuring that incoming data has not been tampered with. Decrypted FLITs may be sent to a FLIT transmission retry buffer 218, which temporarily holds received FLITs in case retransmission in needed due to errors. If errors are detected, retransmission requests are issued. Data may then be forwarded to a CRC 64/48 block 220. A data link protocol (DLP) generator 222 may generate data link protocol headers, which may also be forwarded to the CRC 64/48 block 220. The CRC 64/48 block 220 may verify data integrity by detecting errors in received FLITs. Specifically, the CRC 64/48 block 220 may compute CRC checksums to validate correctness. If errors are found, a request for a retransmission may be sent to the replay controller. A forward error correction (FEC) block 224 may receive data from the CRC 64/48 block 220 and apply FEC encoding to enhance data resilience.

The LTSSM 216 may receive data from the AFL data link 212, and may manage link training, lane alignment and state transitions, ensuring that the link is trained and synchronized. The LTSSM 216 may pass processed data to an ordered set generator 226 that may create control symbols and synchronization patterns for the link layer. Specifically, the ordered set generator 226 may insert ordered sets (e.g., control symbols), and send framed data to a scrambler 228. The scrambler 228 also receives FEC encoded data and randomizes data patterns to reduce electromagnetic interference (EMI). Scrambled data may be passed to a precoding block 230 that may prepare scrambled data for physical transmission, ensuring signal integrity. Specifically, the precoding block 230 may apply precoding techniques for error resilience and sends data to encoders 232. The encoders 232 may convert 8-bit symbols to 10-bit symbols or 128-bit symbols to 130 bit symbols to maintain signal integrity. The encoded data may be sent to the ADP PHY layer 204, where an SERDES block 234 may convert between parallel data and serial data.

On the transmitting side, an SERDES block 236 of the ADP PHY layer 204 may convert between parallel data and serial data, and encoding blocks 238 may encode data in specified formats for robustness in signal transmission. An RX precoding block 240 may prepare encoded data for scrambling and transmission by adjusting signal characteristics. An elastic buffer 242 may temporarily store data to account for timing mismatches. A descrambler 244 may descramble a bit stream to reverse scrambling on the transmission side. An FEC decoder 246 may receive descrambled data and perform FEC decoding to detect and correct transmission errors. A CRC 64/48 block 248 may validate error correction by computing CRC checksums. A replay controller 250 may ensure error recovery by managing retransmissions. A FLIT RX retry buffer 252 may store FLITs until successful transmission is confirmed. An AES-GCM block 254 may encrypt data and append authentication tags.

An ordered-set receiver 256 may receive descrambled data and synchronize data flow ensuring correct link synchronization. An LTSSM 258 may maintain link status by triggering link re-training if an error occurs. An AFL data link 260 may manage logical link control.

The AFCM 184 may be disposed between the receive side and the transmit side, and may be in communication with side-bands of the ADP logical link layer 202 and the ADP PHY layer 206 of both the receive side and the transmit side. The AFCM 184 may dynamically manage data flow across the entire system. The AFCM 184 may monitor and adjust flow control signals ensuring congestion avoidance and error recovery. The AFCM 184 may interface with all layers to maintain system stability and performance.

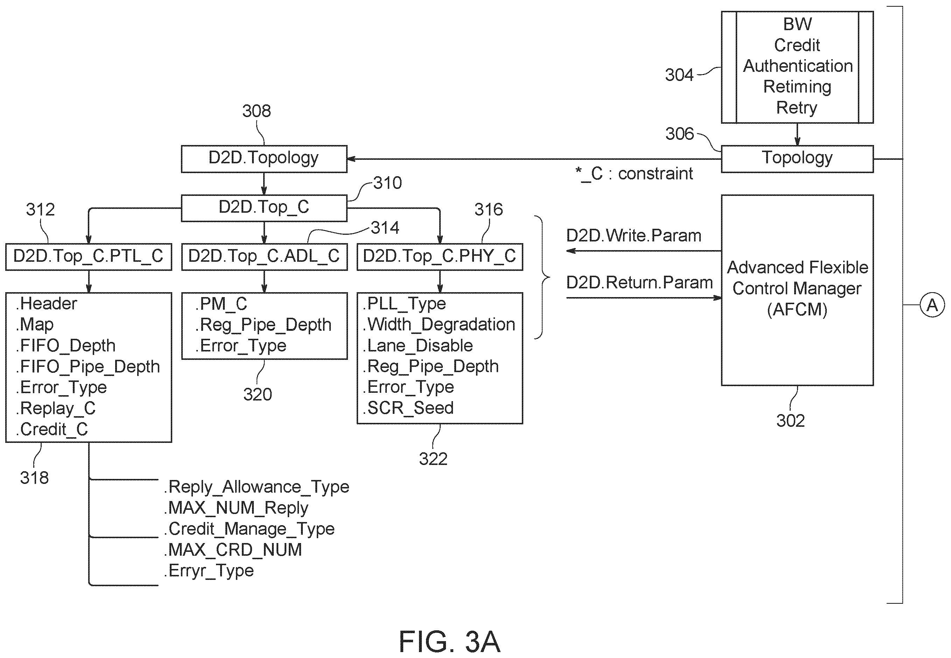

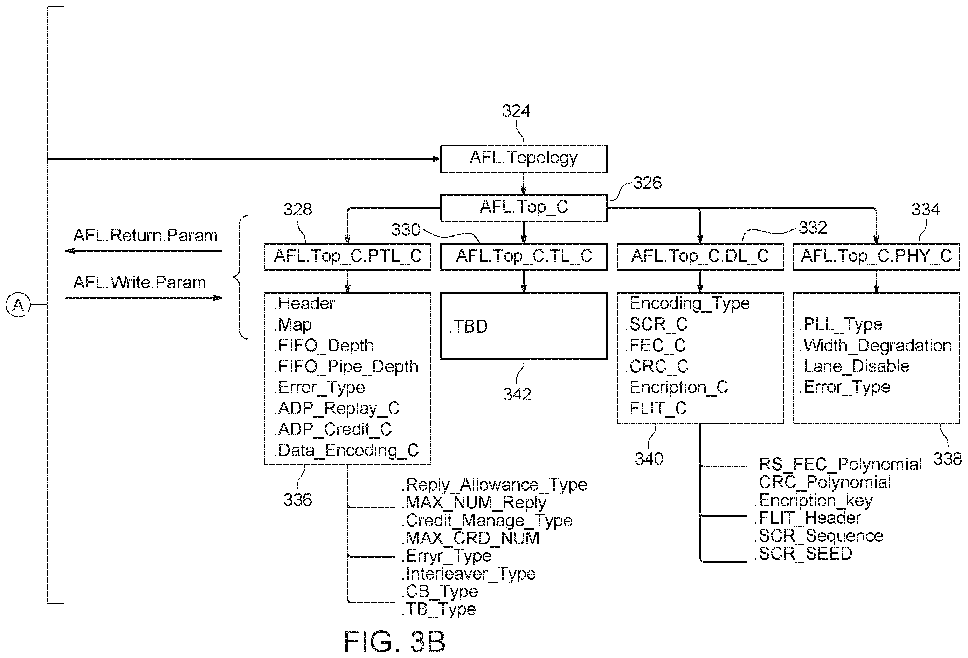

FIGS. 3A-3B are diagrams illustrating AFCM topology configuration, according to an embodiment. An AFCM 302 may perform overall management and configuration of topologies. The AFCM 302 may ensure seamless integration and coordination of both a D2D topology module and an AFL topology module while enforcing constraints and managing operational flows. Specifically, the AFCM 302 may handle bandwidth allocation, credit management, authentication, retry mechanisms, and re-timing processes 304, which are vital operations for maintaining system stability and efficiency in high-speed interconnect environments. Parameters may be written by and returned to the AFCM 302, which dictates how data and acknowledgement signals traverse through system, adhering to the D2D constraints enforced by the AFCM 302.

If a topology 306 corresponds to a D2D topology 308, a top constraint 310 may be defined. The top constraint 310 may include PTL constraints 312, ADL layer constraints 314, and PHY constraints 316. The PTL constraints 312 may have first parameters 318 including, for example, header information for data packets, memory mapping or address mapping details, configuration of first-in first-out (FIFO) buffers (depth/pipe depth), error handling and flow control mechanisms (error type, reply constraint, and credit constraint). The ADL constraints 314 may have second parameters 320 including, for example, power management constraint, register pipeline depth, and error type. The PHY constraints 316 may include third parameters 322 including, for example, phase-locked loop type, width degradation, lane disable, register pipeline depth, error type, and scrambler seed.

If the topology 306 corresponds to an AFL topology 324, a top constraint 326 may be defined. The top constraint 326 may include PTL constraints 328, timing layer constraints 330, data link layer constraints 332, and PHY constraints 334. The PTL constraints 328 may have fourth parameters 336 similar to those of the PTL constraints 312 of the D2D topology 308. The PHY constraints 334 may have fifth parameters 338 similar to those of the PHY constraints 316 of the D2D topology 308. The data link layer constraints 332 may include sixth parameters 340 including, for example, encoding type, scrambler constraint, forward error correction (FEC) constraint, CRC constraint, encryption constraint, and FLIT constraint. The timing layer constraints 330 may have parameters 342 that are to be determined.

The AFCM 302 may integrate D2D and AFL configurations, enforce constraints, and ensure system-wide coherence. A lower-level constraint cannot violate a higher-level constraint. Except for design specific constraints (e.g., FIFO depth), constraints are automatically determined by upper-level constraints (excluding the top-level constraint). Separate corresponding constraints may be provided for transmission and reception.

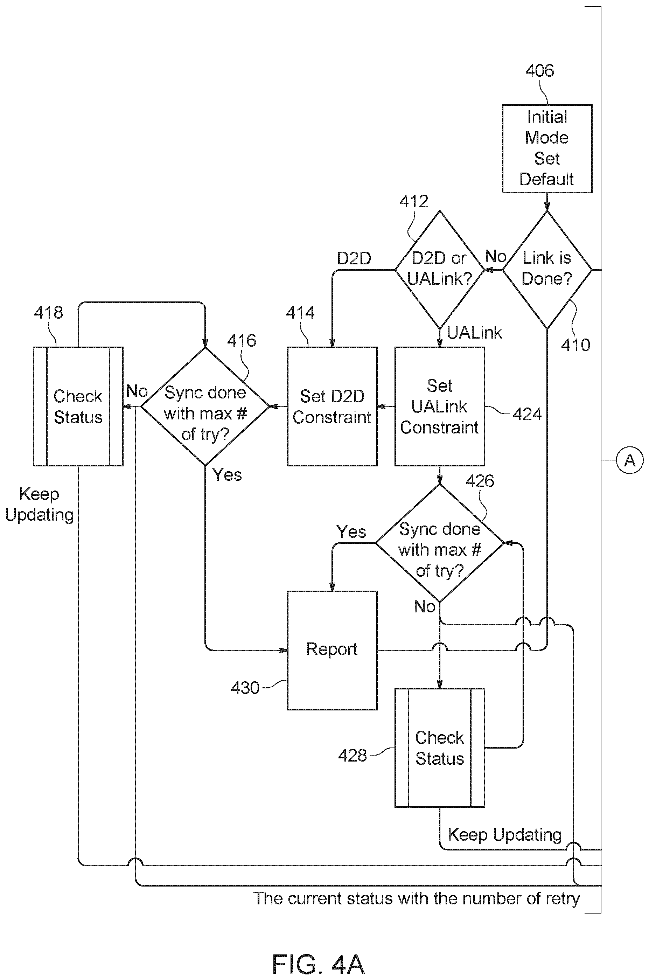

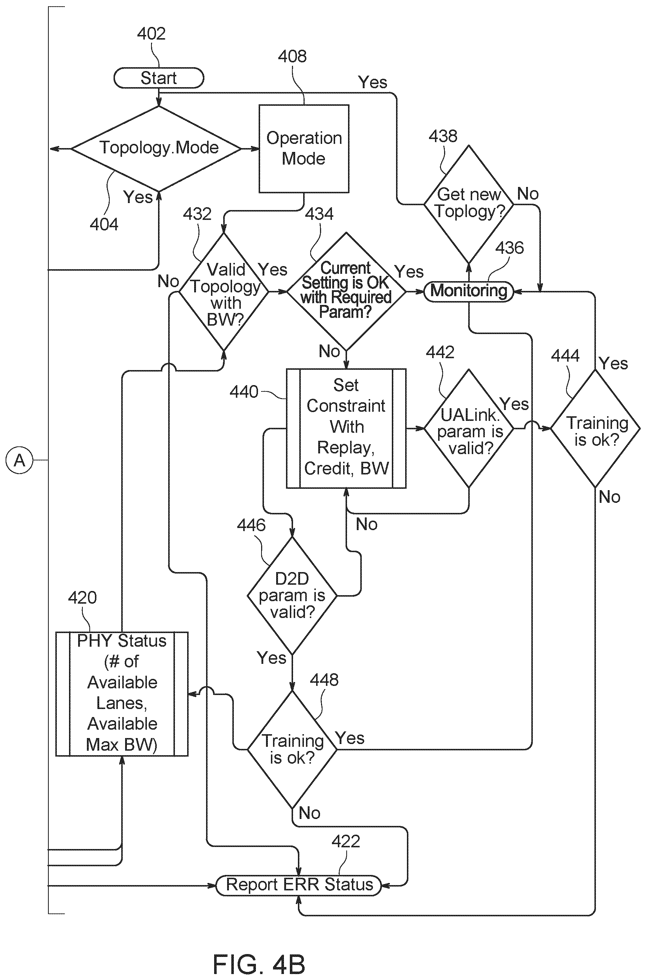

FIGS. 4A-4B are diagrams illustrating a method of operating the AFCM, according to an embodiment. At 402, operation of the AFCM may be initiated. At 404, it may be determined whether the AFCM is in an initialization mode 406 or an operation mode 408. If the AFCM is in the initialization mode 406, it may be determined if link initialization is complete at 410. If link initialization is not complete, initialization settings may be configured for a D2D interface or a UALink at 412.

In setting initialization settings for the D2D interface, a constraint may be configured specific to the D2D interface at 414, as described above with respect to FIGS. 3A-3B. At 416, it may be determined if synchronization is complete with respect to the D2D interface. If synchronization is not complete, the synchronization status may be determined at 418. The current synchronization status may be provided to a physical layer status block 420, and it is again determined if synchronization is complete with respect to the D2D interface at 416. If the synchronization is not complete with respect to the D2D interface within a maximum number of attempts, an error status may be reported at 422.

In setting the initialization settings for the UALink, a constraint may be configured specific to the UALink at 424. At 426, it may be determined if synchronization is complete with respect to the UALink. If synchronization is not complete, the synchronization status may be determined at 428. The current synchronization status may be provided to the physical layer status block 420, and it is again determined if synchronization is complete with respect to the UALink at 426. If the synchronization is not complete with respect to the UALink within the maximum number of attempts, an error status may be reported at 422.

If the synchronization is complete with respect to both the D2D interface at 416 and the UALink at 426, a report may be configured at 430, which indicates establishment of the link. At 310 it may be determined whether the link is established. If the report indicates that the link is established, the methodology returns to 404 to begin a next mode.

If the AFCM is in the operation mode 408 (after the initialization mode 406), it may be determined whether the topology is valid with respect to the bandwidth at 432. If the topology is not valid with respect to the bandwidth, an error status may be reported at 422. If the topology is valid with respect to the bandwidth, it may be determined whether a current setting complies with required parameters at 434. If the current setting complies with required parameters, monitoring of the D2D interface and the UALink may be performed at 436. Monitoring may continue until it is determined that there is a new topology at 438, which returns the methodology to 404.

If the current setting does not comply, a constraint may be set with respect to a number of replies, enablement of replies, credit information and/or bandwidth allocation at 440. At 442, it may be determined whether a UALink parameter is valid. If the UALink parameter is not valid, the constraint is reset at 440. If the UALink parameter is valid, it may be determined whether training is acceptable at 444. The result of this determination may be passed to the physical layer status block at 420. If the training is not acceptable, an error status may be reported at 422. If the training is acceptable, monitoring of the D2D interface and the UALink may be performed at 436.

At 446, it may be determined whether a D2D interface parameter is valid. If the D2D interface parameter is not valid, the constraint is reset at 440. If the D2D interface parameter is valid, it may be determined whether training is acceptable at 448. The result of this determination may be passed to the physical layer status block at 420. If the training is not acceptable, an error status may be reported at 422. If the training is acceptable, monitoring of the D2D interface and the UALink may be performed at 436.

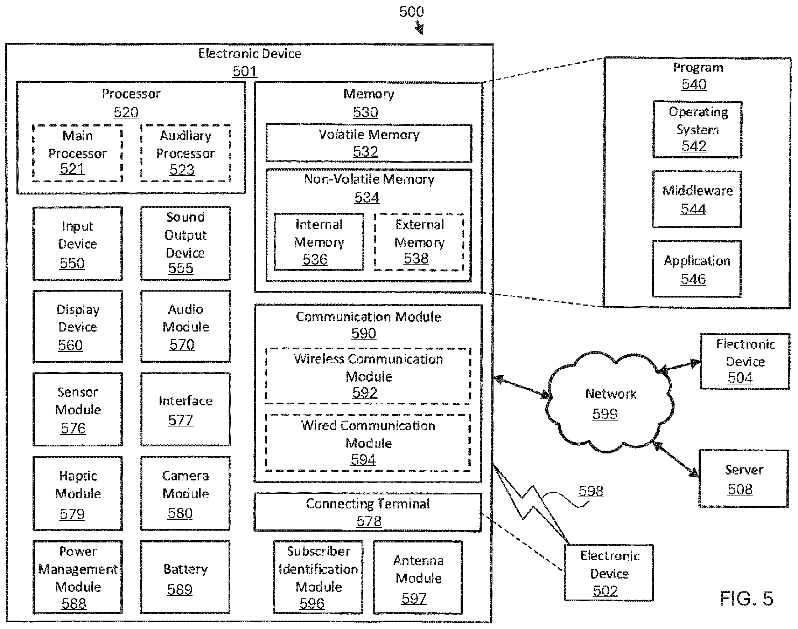

FIG. 5 is a block diagram of an electronic device in a network environment 500 for processing commands, according to an embodiment.

Referring to FIG. 5, an electronic device 501 in a network environment 500 may communicate with an electronic device 502 via a first network 598 (e.g., a short-range wireless communication network), or an electronic device 504 or a server 508 via a second network 599 (e.g., a long-range wireless communication network). The electronic device 501 may communicate with the electronic device 504 via the server 508. The electronic device 501 may include a processor 520, a memory 530, an input device 550, a sound output device 555, a display device 560, an audio module 570, a sensor module 576, an interface 577, a haptic module 579, a camera module 580, a power management module 588, a battery 589, a communication module 590, a subscriber identification module (SIM) card 596, or an antenna module 597. In one embodiment, at least one (e.g., the display device 560 or the camera module 580) of the components may be omitted from the electronic device 501, or one or more other components may be added to the electronic device 501. Some of the components may be implemented as a single integrated circuit (IC). For example, the sensor module 576 (e.g., a fingerprint sensor, an iris sensor, or an illuminance sensor) may be embedded in the display device 560 (e.g., a display).

The processor 520 may execute software (e.g., a program 540) to control at least one other component (e.g., a hardware or a software component) of the electronic device 501 coupled with the processor 520 and may perform various data processing or computations.

As at least part of the data processing or computations, the processor 520 may load a command or data received from a host or another component (e.g., the sensor module 576 or the communication module 590) in volatile memory 532, process the command or the data stored in the volatile memory 532, and store resulting data in non-volatile memory 534. The processor 520 may include a main processor 521 (e.g., a central processing unit (CPU) or an application processor (AP)), and an auxiliary processor 523 (e.g., a graphics processing unit (GPU), an image signal processor (ISP), a sensor hub processor, or a communication processor (CP)) that is operable independently from, or in conjunction with, the main processor 521. Additionally or alternatively, the auxiliary processor 523 may be adapted to consume less power than the main processor 521, or execute a particular function. The auxiliary processor 523 may be implemented as being separate from, or a part of, the main processor 521.

The auxiliary processor 523 may control at least some of the functions or states related to at least one component (e.g., the display device 560, the sensor module 576, or the communication module 590) among the components of the electronic device 501, instead of the main processor 521 while the main processor 521 is in an inactive (e.g., sleep) state, or together with the main processor 521 while the main processor 521 is in an active state (e.g., executing an application). The auxiliary processor 523 (e.g., an image signal processor or a communication processor) may be implemented as part of another component (e.g., the camera module 580 or the communication module 590) functionally related to the auxiliary processor 523. The auxiliary processor 523 may utilize the D2D interfaces and high-speed inter-accelerator links described above with respect to FIGS. 1-4. The processor 520 and/or the auxiliary processor 523 serve as an example of a controller in the appended claims.

The memory 530 may store various data used by at least one component (e.g., the processor 520 or the sensor module 576) of the electronic device 501. The various data may include, for example, software (e.g., the program 540) and input data or output data for a command related thereto. The memory 530 may include the volatile memory 532 or the non-volatile memory 534. Non-volatile memory 534 may include internal memory 536 and/or external memory 538. The memory 530 serves as an example of a non-transitory computer readable storage medium storing instructions that, when executed, cause a controller (e.g. the processor 520 and/or the auxiliary processor 523) to perform a method as described above or as claimed in any one of the appended method claims.

The program 540 may be stored in the memory 530 as software, and may include, for example, an operating system (OS) 542, middleware 544, or an application 546.

The input device 550 may receive a command or data to be used by another component (e.g., the processor 520) of the electronic device 501, from the outside (e.g., a user) of the electronic device 501. The input device 550 may include, for example, a microphone, a mouse, or a keyboard.

The sound output device 555 may output sound signals to the outside of the electronic device 501. The sound output device 555 may include, for example, a speaker or a receiver. The speaker may be used for general purposes, such as playing multimedia or recording, and the receiver may be used for receiving an incoming call. The receiver may be implemented as being separate from, or a part of, the speaker.

The display device 560 may visually provide information to the outside (e.g., a user) of the electronic device 501. The display device 560 may include, for example, a display, a hologram device, or a projector and control circuitry to control a corresponding one of the display, hologram device, and projector. The display device 560 may include touch circuitry adapted to detect a touch, or sensor circuitry (e.g., a pressure sensor) adapted to measure the intensity of force incurred by the touch.

The audio module 570 may convert a sound into an electrical signal and vice versa. The audio module 570 may obtain the sound via the input device 550 or output the sound via the sound output device 555 or a headphone of an external electronic device 502 directly (e.g., wired) or wirelessly coupled with the electronic device 501.

The sensor module 576 may detect an operational state (e.g., power or temperature) of the electronic device 501 or an environmental state (e.g., a state of a user) external to the electronic device 501, and then generate an electrical signal or data value corresponding to the detected state. The sensor module 576 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 577 may support one or more specified protocols to be used for the electronic device 501 to be coupled with the external electronic device 502 directly (e.g., wired) or wirelessly. The interface 577 may include, for example, a high- definition multimedia interface (HDMI), a universal serial bus (USB) interface, a secure digital (SD) card interface, or an audio interface.

A connecting terminal 578 may include a connector via which the electronic device 501 may be physically connected with the external electronic device 502. The connecting terminal 578 may include, for example, an HDMI connector, a USB connector, an SD card connector, or an audio connector (e.g., a headphone connector).

The haptic module 579 may convert an electrical signal into a mechanical stimulus (e.g., a vibration or a movement) or an electrical stimulus which may be recognized by a user via tactile sensation or kinesthetic sensation. The haptic module 579 may include, for example, a motor, a piezoelectric element, or an electrical stimulator.

The camera module 580 may capture a still image or moving images. The camera module 580 may include one or more lenses, image sensors, image signal processors, or flashes. The power management module 588 may manage power supplied to the electronic device 501. The power management module 588 may be implemented as at least part of, for example, a power management integrated circuit (PMIC).

The battery 589 may supply power to at least one component of the electronic device 501. The battery 589 may include, for example, a primary cell which is not rechargeable, a secondary cell which is rechargeable, or a fuel cell.

The communication module 590 may support establishing a direct (e.g., wired) communication channel or a wireless communication channel between the electronic device 501 and the external electronic device (e.g., the electronic device 502, the electronic device 504, or the server 508) and performing communication via the established communication channel. The communication module 590 may include one or more communication processors that are operable independently from the processor 520 (e.g., the AP) and supports a direct (e.g., wired) communication or a wireless communication. The communication module 590 may include a wireless communication module 592 (e.g., a cellular communication module, a short-range wireless communication module, or a global navigation satellite system (GNSS) communication module) or a wired communication module 594 (e.g., a local area network (LAN) communication module or a power line communication (PLC) module). A corresponding one of these communication modules may communicate with the external electronic device via the first network 598 (e.g., a short-range communication network, such as BLUETOOTH^{™}, wireless-fidelity (Wi-Fi) direct, or a standard of the Infrared Data Association (IrDA)) or the second network 599 (e.g., a long-range communication network, such as a cellular network, the Internet, or a computer network (e.g., LAN or wide area network (WAN)). These various types of communication modules may be implemented as a single component (e.g., a single IC), or may be implemented as multiple components (e.g., multiple ICs) that are separate from each other. The wireless communication module 592 may identify and authenticate the electronic device 501 in a communication network, such as the first network 598 or the second network 599, using subscriber information (e.g., international mobile subscriber identity (IMSI)) stored in the subscriber identification module 596.

The antenna module 597 may transmit or receive a signal or power to or from the outside (e.g., the external electronic device) of the electronic device 501. The antenna module 597 may include one or more antennas, and, therefrom, at least one antenna appropriate for a communication scheme used in the communication network, such as the first network 598 or the second network 599, may be selected, for example, by the communication module 590 (e.g., the wireless communication module 592). The signal or the power may then be transmitted or received between the communication module 590 and the external electronic device via the selected at least one antenna.

Commands or data may be transmitted or received between the electronic device 501 and the external electronic device 504 via the server 508 coupled with the second network 599. Each of the electronic devices 502 and 504 may be a device of a same type as, or a different type, from the electronic device 501. All or some of operations to be executed at the electronic device 501 may be executed at one or more of the external electronic devices 502, 504, or 508. For example, if the electronic device 501 should perform a function or a service automatically, or in response to a request from a user or another device, the electronic device 501, instead of, or in addition to, executing the function or the service, may request the one or more external electronic devices to perform at least part of the function or the service. The one or more external electronic devices receiving the request may perform the at least part of the function or the service requested, or an additional function or an additional service related to the request and transfer an outcome of the performing to the electronic device 501. The electronic device 501 may provide the outcome, with or without further processing of the outcome, as at least part of a reply to the request. To that end, a cloud computing, distributed computing, or client-server computing technology may be used, for example.

Embodiments of the subject matter and the operations described in this specification may be implemented in digital electronic circuitry, or in computer software, firmware, or hardware, including the structures disclosed in this specification and their structural equivalents, or in combinations of one or more of them. Embodiments of the subject matter described in this specification may be implemented as one or more computer programs, i.e., one or more modules of computer-program instructions, encoded on computer-storage medium for execution by, or to control the operation of data-processing apparatus. Alternatively or additionally, the program instructions can be encoded on an artificially-generated propagated signal, e.g., a machine-generated electrical, optical, or electromagnetic signal, which is generated to encode information for transmission to suitable receiver apparatus for execution by a data processing apparatus. A computer-storage medium can be, or be included in, a computer-readable storage device, a computer-readable storage substrate, a random or serial-access memory array or device, or a combination thereof. Moreover, while a computer-storage medium is not a propagated signal, a computer-storage medium may be a source or destination of computer-program instructions encoded in an artificially-generated propagated signal. The computer-storage medium can also be, or be included in, one or more separate physical components or media (e.g., multiple CDs, disks, or other storage devices). Additionally, the operations described in this specification may be implemented as operations performed by a data-processing apparatus on data stored on one or more computer-readable storage devices or received from other sources.

While this specification may contain many specific implementation details, the implementation details should not be construed as limitations on the scope of any claimed subject matter, but rather be construed as descriptions of features specific to particular embodiments. Certain features that are described in this specification in the context of separate embodiments may also be implemented in combination in a single embodiment. Conversely, various features that are described in the context of a single embodiment may also be implemented in multiple embodiments separately or in any suitable subcombination. Moreover, although features may be described above as acting in certain combinations and even initially claimed as such, one or more features from a claimed combination may in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described herein. Other embodiments are within the scope of the following claims. In some cases, the actions set forth in the claims may be performed in a different order and still achieve desirable results. Additionally, the processes depicted in the accompanying figures do not necessarily require the particular order shown, or sequential order, to achieve desirable results. In certain implementations, multitasking and parallel processing may be advantageous.

## Claims

1. A method comprising:
configuring, by a hardware control manager (184, 302) of an electronic device (501), a die-to-die, D2D, constraint for a topology, wherein the hardware control manager manages a D2D interface;
performing, by the hardware control manager (184, 302), D2D synchronization based on the D2D constraint;
configuring, by the hardware control manager (184, 302), an inter-accelerator link constraint for the topology, wherein the hardware control (184, 302) manager manages a high-speed inter-accelerator link;
performing, by the hardware control manager (184, 302), high-speed inter-accelerator link synchronization based on the inter-accelerator link constraint; and
monitoring, by the hardware control manager (184, 302), the D2D interface and the high-speed inter-accelerator link based on the topology.

2. The method of claim 1, wherein the D2D constraint comprises at least one of a physical transport layer, PTL, constraint, an application data link, ADL, constraint, or a physical layer, PHY, constraint.

3. The method of claim 1 or 2, wherein the inter-accelerator link constraint comprises at least one of a PTL constraint, a timing layer constraint, a data link layer constraint, and a PHY constraint.

4. The method of any one of claims 1 to 3, wherein:
the D2D synchronization is performed within a maximum number of synchronization attempts; and
the high-speed inter-accelerator link synchronization is performed within the maximum number of synchronization attempts.

5. The method of any one of claims 1 to 4, wherein the topology is valid with respect to a bandwidth, a current setting is unacceptable with respect to a parameter of the topology, and further comprising:
setting, by the hardware control manager (184, 302), a constraint with respect to at least one of a number of replies, enablement of replies, credit information, or bandwidth allocation.

6. The method of claim 5, wherein an inter-accelerator link parameter and a D2D parameter are valid for the constraint.

7. The method of claim 5, wherein an inter-accelerator link parameter or a D2D parameter are not valid for the constraint, and further comprising:
resetting the constraint by the hardware control manager (184, 302).

8. An electronic device (501) comprising:
dies joined by a die-to-die, D2D, interface;
accelerators joined by a high-speed inter-accelerator link;
a hardware control manager (184, 302) configured to manage the D2D interface and
the high-speed inter-accelerator link by:
configuring the D2D constraint for a topology;
performing D2D synchronization based on the D2D constraint;
configuring an inter-accelerator link constraint for the topology;
performing high-speed inter-accelerator link synchronization based on the inter-accelerator link constraint; and
monitoring the D2D interface and the high-speed inter-accelerator link based on the topology.

9. The electronic device (501) of claim 8, wherein the D2D constraint comprises at least one of a physical transport layer, PTL, constraint, an application data link, ADL, constraint, or a physical layer, PHY, constraint.

10. The electronic device (501) of claim 8 or 9, wherein the inter-accelerator link constraint comprises at least one of a PTL constraint, a timing layer constraint, a data link layer constraint, and a PHY constraint.

11. The electronic device (501) of any one of claims 8 to 10, wherein:
the D2D synchronization is performed within a maximum number of synchronization attempts; and
the high-speed inter-accelerator link synchronization is performed within the maximum number of synchronization attempts.

12. The electronic device (501) of any one of claims 8 to 11, wherein the topology is valid with respect to a bandwidth, a current setting is unacceptable with respect to a parameter of the topology, and the hardware control manager (184, 302) is further configured to:
set a constraint with respect to at least one of a number of replies, enablement of replies, credit information, or bandwidth allocation.

13. The electronic device (501) of claim 12, wherein an inter-accelerator link parameter and a D2D parameter are valid for the constraint.

14. The electronic device (501) of claim 12, wherein an inter-accelerator link parameter or a D2D parameter are not valid for the constraint, and the hardware control manager (184, 302) is further configured to:
reset the constraint by the hardware control manager (184, 302).

15. An electronic device (501) comprising:
a controller (520); and
a non-transitory computer readable storage medium (530) storing instructions that, when executed, cause the controller (520) to perform the method according to any one of claims 1 to 7.
